# EUROPEAN PATENT APPLICATION

(11) **EP 2 273 746 A1**
(43) Date of publication of application: **12.01.2011**
(21) Application number: 09290496.0
(22) Date of filing: 26.06.2009
(51) Int. Cl.: H04L 29/06, H04L 29/08, H04L 12/28

(54) **Method to control legacy devices**

(71) Applicant: Alcatel Lucent, 75008 Paris (FR)
(72) Inventor: Liekens, Werner Marie, 2860 Sint-Katelijne-Waver (BE); Van Leeuwen, Tom, 9000 Gent (BE); Justen, Pascal Marie Edouard Julien, 1150 Sint-Pieters-Woluwe (BE); Vermoesen, Luc, 2880 Bornem (BE); Van Bogaert, Bruno, 1030 Schaarbeek (BE)
(74) Representative: Narmon, Gisèle Marie Thérèse

(57) **Abstract**

A method to control legacy devices located in home networks is provided and whereof a plurality of the legacy devices communicates according to a predefined legacy protocol, is provided. The method comprises the steps of
- associating by a legacy proxy in a home network to a newly connected legacy device of the legacy devices an Internet Protocol address and storing a generated association in a memory; and
- forwarding by the legacy proxy the associated Internet Protocol address to a legacy controller in an Internet Protocol network; and in order to support communication between the legacy controller and the legacy device :
- upon reception by the legacy proxy (LP1) of a legacy protocol packet according to the legacy protocol, first transforming by first transforming means, the legacy protocol packet into an Internet Protocol packet being destined for the legacy controller, and comprising the associated Internet Protocol address being determined according to the above mentioned association; and
- upon reception by the legacy proxy of an Internet protocol packet, second transforming by second transforming means, the Internet Protocol packet into a legacy protocol packet being destined for the legacy device and therefore comprising a legacy address of the legacy device.

## Description

The present invention relates to a method to control legacy devices and to a legacy controller with a legacy proxy to execute such a method.

Legacy domotica devices, such as e.g. X10 devices which are controlled according to the legacy protocol X10, usually terminate at a proxy device, also called a controller node. This means that the legacy protocol usually stops at this controller node.

The controller node then offers a management interface for local management or optionally in most case a web interface to configure and upload data via this interface.

As such behind the legacy proxy, the network is closed. Furthermore, other home network legacy devices that are communicating according to another predefined legacy protocol such as e.g. ZigBee, are not able to communicate with the first mentioned legacy devices i.e. legacy devices communicating with X10 protocol.

Another disadvantage of the know legacy domotica systems is that Quality of Service for the whole home network is not possible to be applied.

Furthermore, the legacy devices of the known legacy systems can not be shared to other applications.

An object of the present invention is to provide a method to control legacy devices and a legacy controller with a legacy proxy to execute such a method of the above known type but wherein the above mentioned drawbacks are not present anymore.

According to the invention, this object is achieved due to the fact that the legacy proxy device, in a home network and that communicates with legacy devices in its home network according to a predefined legacy protocol, comprises:
- a first processor to associate to a newly connected legacy device of the legacy devices an Internet Protocol address and to store a generated association in a memory. A possible implementation to acquire this Internet Protocol address is to request, for such a newly detected legacy device, from a DHCP server in the IP network, a new IP address. This new IP address is associated to the newly detected legacy device and the association is stored in a memory; and

- a forwarding means to forward the associated Internet Protocol address towards a legacy controller in an Internet Protocol network; and
   in order to support communication between the legacy controller and the legacy device via the legacy proxy:
- upon reception by the legacy proxy of a legacy protocol packet according to the legacy protocol, first transforming means to transform the legacy protocol packet into an Internet Protocol packet being destined for the legacy controller, whereby the Internet Protocol packet comprises the associated Internet Protocol address that was determined according to the previous made association; and
   upon reception by the legacy proxy of an Internet protocol packet, second transforming means to transform the Internet Protocol packet into a legacy protocol packet being destined for the legacy device and therefore comprising a legacy address of the legacy device.

It has to be explained that, according to the first transforming step being executed by a first transforming means, a legacy packet is transformed into an Internet Protocol packet being destined for the legacy controller. This means the Internet Protocol address of the Legacy controller must be comprised in the header of the Internet packet at a place of the destination address.

Furthermore, the legacy controller needs to acquire the knowledge from which legacy device the original legacy packet was originated. This is realized according to the present application by comprising in the created IP packet the previously associated and forwarded IP address.

It also has to be explained that, according to the second transforming step being executed by a second transforming means, an Internet packet is transformed into a legacy packet begin destined for the legacy device in the home network. This means that the legacy proxy also has the knowledge about the association between the legacy address and its legacy device.

Furthermore, according to the present application, a legacy controller is provided to control legacy devices in home networks. In the event when a plurality of the legacy devices communicates according to a predefined legacy protocol, the legacy controller (LC) comprises a legacy subcontroller to control the plurality of the legacy devices according to this predefined legacy protocol. According to the present application, the legacy controller is now located in the Internet Protocol Network and it comprises an Internet Protocol processor to receive and to process Internet Protocol packets and to associate Internet Protocol addresses with respective legacy devices of the plurality of the legacy devices.

As such, the present application provides a direct possibility to manage the legacy domotica devices by means of a legacy controller being located in the Internet Protocol network and by using regular Internet Protocol addresses and interfaces. Moreover, it provides the possibility to use regular Internet Protocol diagnostic tooling to check and to troubleshoot or to diagnose the legacy home domotica systems. In this way legacy networks such as X10 become reachable by the Internet Protocol network, whereby as a consequence, all related network tools exciting in the Internet Protocol world can be reused. According to the present application, each legacy device is individual reachable in the Internet Protocol network, existing networking tools in the internet world can be reused and cross platform communication becomes possible. Finally, it has to be mentioned that also the logic of the sensor gateway deeper into the network is offloaded.

A possible implementation for the transforming steps is provided
by comprising in the step of first transforming :
- a step of replacing a legacy protocol header of the legacy protocol packet with an Internet Protocol header that comprises, respectively, an Internet Protocol address of the legacy controller at a destination location and the associated Internet Protocol address at a source location of the Internet Protocol header; and
by comprising in the step of second transforming :
- a step of replacing an Internet Protocol header of the Internet Protocol packet with a legacy protocol header that comprises a legacy protocol address of the legacy device at a destination location of the legacy protocol of the legacy protocol header.

Further characteristic features for the transforming steps are realized
by comprising in the step of first transforming :
- a step of keeping a payload of the legacy protocol packet as a payload of the Internet Protocol packet; and
by comprising in the step of second transforming :
- a step of keeping a payload of the Internet Protocol packet as a payload of the legacy protocol packet.

A further characteristic features is realized by also forwarding by the legacy controller to the legacy proxy its Internet Protocol address.

Another possible implementation of the present application is realized by comprising in the step of associating a step of requesting by the legacy proxy to a Dynamic Host Configuration Protocol server in the Internet Protocol network a new Internet Protocol address for the newly connected legacy device.

A final possible embodiment is described by realizing the step of forwarding the associated Internet Protocol address by forwarding the associated Internet Protocol address via a Home Device Manager in the Internet Protocol network and by means of a Customer Premises Equipment configuration protocol such as a TR69 protocol.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', used in the following description of an embodiment, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

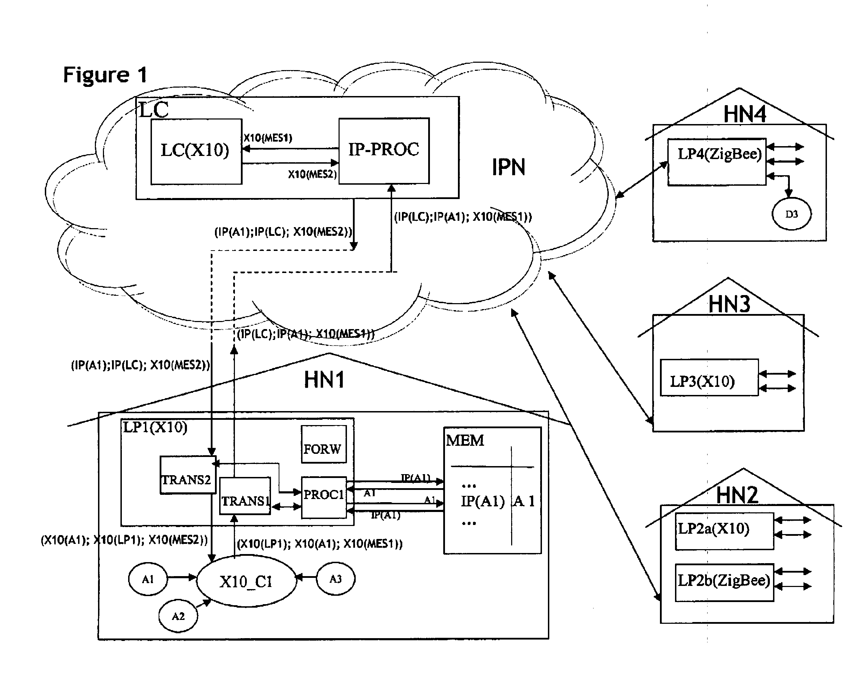

The above and other objects and features of the invention will become more apparent and the invention itself will be best understood by referring to the following description of an embodiment taken in conjunction with the accompanying drawings wherein Figure 1 represents a network with different home networks being coupled to the Internet Protocol network.

The working of the device according to the present invention in accordance with its telecommunication environment that is shown in Figure 1 will be explained by means of a functional description of the different blocks shown therein. Based on this description, the proctical implementation of the blocks will be obvious to a person skilled in the art and will therefor not be described in details. In addition, the principle working of the method to control legacy devices will be described in further detail.

Referring to Figure 1, the Internet Protocol network is shown IPN whereto different Home Networks are couples, respectively, Home Network 1 HN1, Home Network 2 HN2, Home Network 3 HN3 and Home Network 4 HN4.

A legacy controller LC is located in the Internet Protocol Network IPN.

Each of the Home networks comprises legacy devices. In order not to overload the actual Figure 1, not all legacy devices are shown. Each of the Home Networks comprises also a Legacy Proxy which communicates each with at least a plurality of the legacy devices in its home network according to a predefined legacy protocol. In this way, the legacy proxy LP1 (X10) in the Home Network HN 1 communicetes with a set of proxy devices i.e. A1 , A2 and A3 according to a known legacy protocol X10. Furthermore, the legacy proxy LP4(ZigBee) communicates with a plurality of legacy devices susch as e.g. D3 in the Home Network HN4 according to another domotica protocol i.e. ZigBee. As a matter of example, also Legacy proxy LP3 in Home Network HN3 communicates with its legacy devices according to the X10 legacy protocol. And finally, it is shown in the Home Network HN2 that different kinds of legacy proxy's such as LP2a(X10) and LP2B(ZigBee) can be present in one Home Network HN2.

In the Home Network HN1 a Legacy coordinator X10_C1 is shown. This coordinator is coupled to the legacy proxy LP1 and to the legacy devices A1, A2 and A3. It has to be explained that such a legacy coordinator is not mandatory to implement the present application.

In the event when a Home Network is enabled to control its legacy devices according to the present application, it comprises also a memory MEM being coupled to its legacy proxy. Such a memory is shown in the home network HN1 where it is coupled to legacy proxy LP1(X10)).

A legacy proxy according to the present invention e.g. Legacy proxy LP1(X10) comprises
- a processor PROC1 coupled to the memory MEM; and
- a forwarder FORW coupled to an input/output of the legacy proxy LP1 (not shown) and to the first processor PROC1 (also not shown); and
- a first transformer coupled between an input/output of the legacy proxy LP1 and the legacy devices A1, A2 and A3, eventual via a legacy coordinator such as X10_C1, and the processor PROC1.

The legacy controller LC according to the present application being located in the Internet Protocol network comprises a legacy subcontroller LC(X10) and an Internet Protocol processor IP-PROC coupled thereto.

The different actions to control legacy devices such as A1, A2 and A3 but also D3 in the different home networks HN1, HN2, HN3 and HN4, according to the present application comprises the steps being executed by the functional blocks as described hereafter.

Presume that a plurality A1, A2 and A3 of the global set of legacy devices communicates with its legacy proxy LP1 according to a predefined legacy protocol i.e. X10.

During a first initialization phase the processor PROC1 associates to a newly connected legacy device such as e.g. A1 Internet Protocol address IP(A1) and stores an as such generated association in a memory MEM. It has to be explained that the processor PROC1 here fore first a requests to a Dynamic Host Configuration Protocol Server (not shown) in the Internet Protocol Network IPN a new Internet Protocol address for this newly connected legacy device A1. The DHCP server provides a new Internet Protocol address IP(A1) to the Legacy Proxy processor PROC1. The processor PROC1 stores the association between the legacy device A1 and the acquired internet protocol address lP(A1) into the memory MEM. Furthermore, the newly acquired internet protocol address IP(A1) is as well forwarded by the forwarder FORW to the legacy controller LC. In this way the legacy controller LC acquires the knowledge that a new legacy device is coupled to its control domain in order to be controlled i.e. the legacy device with the unique Internet Protocol address IP(A1).

Once theses two steps have been realized the initialization phase is completed and communication between the legacy controller LC and the legacy devices can start up.

In order to support the communication between the legacy controller LC and the legacy device A1 two kinds of transforming are realized by the legacy proxy LP1(X10). These kinds of forwarding will now be explained.

Presume that the legacy device A1 want to send a message e.g. MES1 towards its legacy controller LC. It has to be remarked here that the legacy device A1 even doesn't have to know that its legacy controller is located in the Internet Protocol network. Since communication runs via its legacy proxy LP1(X10) and since the legacy device A1 communicates with its proxy LP1 (X10) according to the legacy protocol X10, the legacy device A1 sends a legacy packet to the first forwarder FORW1. The legacy packet comprises the legacy address X10(LP1) of the legacy proxy LP1 i.e. the destination; the legacy address X10(A1) of the legacy device A1 i.e. source and the message MES1 according to the legacy protocol X10. This is shown in the Figure 1 by means of (X10(LP1); X10(A1); X10(MES1)).

Upon reception of this message legacy protocol packet (X10(LP1); X10(A1); X10(MES1)) by the first transformer TRANS1 the legacy protocol packet is transformed into an Internet Protocol packet that is destined for the legacy controller LC and that comprises the associated Internet Protocol address IP(A1) being determined according to the previously stored association. Indeed, upon reception of legacy packet the first transformer TRANS1 retrieves the legacy source address X10(A1) from the packet and requests based upon this X10(A1) source address the associated Internet protocol from the processor PROC1. The processor PROC1 retrieves, based upon the legacy source address X10(A1), the associated Internet Protocol address IP(A1) from the MEM and provides it to the first forwarder FORW1. The first forwarder FORW1 comprises the address IP(A1) in the created Internet Protocol packet.

It has to be explained that the inclusion of the IP(A1) address can be implemented according to different ways such as e.g. comprises the IP(A1) address at the source location of the newly generated Internet Protocol packet or comprising it at a predefined place in the payload of the packet, etc. The aim is that the generated Internet Protocol packet should include the IP(A1) address whereby the legacy controller will know upon reception of the packet for which legacy device it needs to process the message MES1.

As described above, since the generated Internet packet is destined for the legacy controller LC, the generated Internet Protocol packet should include the Internet Protocol address IP(LC) of the legacy controller LC.

Furthermore, the generated Internet packet also includes the message X10(MES1) being destined for the legacy controller LC. Here also, it has to be explained that the legacy message C10(MES1) can merely be copy / pasted into the payload of the new Internet Protocol packet but could as well take only a subpart of the total available global payload.

The necessarily content of the generated Internet Protocol packet is shown in Figure 1 by means of (IP(LC);IP(A1); X10(MES1)). This Internet Protocol packet is forwarded through the Internet Protocol network IPN to the legacy controller LC.

The second kind of transforming is required upon reception of an Internet protocol packet by the legacy proxy LP1. Such an Internet protocol packet will include the Internet protocol address IP(A1) of the legacy device for which the packet is destined i.e. the destination address, the internet protocol address of the legacy controller LC i.e. the source address and a message e.g. MES2 according to the legacy protocol X10 in the payload of the packet. The required fields are shown in Figure 1 by (IP(A1);IP(LC); X10(MES2)). Upon reception of this IP packet by the second transformer TRANS2 it is transformed by this second transformer TRANS2 into a legacy protocol packet being destined for the legacy device A1 and therefore comprising the legacy address X10(A1) of the legacy device (A1). As previously explained, but now in the opposite direction, the destination IP address IP(A1) is retrieved from the packet and used to retrieve via the processor PROC 1 from the memory MEM1 the associated reference of the legacy device A1. Based upon the reference of the legacy device A1, the X10 address is determined X10(A1) and is used in the destination address part of the generated X10 legacy packet. The message X10(MES2) is copy/pasted in the legacy packet and the source address. The required information of the generated legacy packet is shown in Figure 1 by (X10(A1); X10(LP1); X10(MES2)).

Hereafter, it will be described what happens with an IP packet upon reception by the legacy controller LC. As shown in Figure 1 the legacy controller receives in IP packet that comprises IP(LC), IP(A1) and X10(MES1) as the required information. The legacy controller LC comprises the Internet Protocol processor IP-PROC to receive and to process the Internet Protocol packets and to associate Internet Protocol addresses with the respective legacy devices in his control domain. The legacy protocol message e.g. X10(MES1) is retrieved from the payload of the IP packet and is forwarded to the legacy subcontroller LC(X10) which is enabled to process and generate legacy messages, such as MES1 and MES2, according to the X10 legacy protocol. The legacy subcontroller LC(X10) processes the X10(MES1) message and generates eventual a new message destined for the legacy device A1.

Presume that the legacy subcontroller LC(X1) generates a message MES2 according to the legacy protocol X10 destined for the legacy device A1. This message X10(MES2) is forwarded by the legacy subcontroller LC(X10) to the Internet Protocol processor IP-PROC. The IP processor IP-PROC encapsulates this X10(MES2) message into an IP packet with the previously received IP address IP(A1) for legacy device A1 as destination address and its own IP address as source address. The required content of the IP packet is shown as (IP(A1);IP(LC); X10(MES2)). This IP packet is forwarded via the Internet to the legacy proxy LP1 of the legacy device A1.

It has to remarked here that although in this described embodiment only one subcontroller LC(X10) is shown which controls the legacy devices in its control domain according to the legacy protocol X10. However, the present application is not limited to only one legacy subcontroller, but different legacy controllers acting according to different legacy protocol might be included in the legacy controller in the IP network. These different legacy subcontrollers can be coupled as well whereby common processing can be provided for all the legacy devices of the different control domains of each subcontroller whereby common control of all legacy devices in the different home networks HN1, HN2, HN3 and HN4 is realized.

The different steps will now be further explained by means of some further concrete examples.

As an example, an X10 legacy device A1 is added to the X10 network in the Home Network HN1 and receives an IP address IP(A1) for the external world. The user in the Home Network HN1 sets the House code and Device code on the X10 device. The user plugs the device A1 into the X10 network, and adds the device A1 in the user interface provided in the legacy proxy LP1 (X10) software. However, in the event of e.g. autodetection no user interaction is needed.

As explained above, for each X10 device added to the X10 network an IP address is assigned to the device and an interface is created on the Wireless Area Network side. In this actual example the IP(A1) address might be e.g. "10.10.10.1". The IP(A1) is mapped into the memory MEM i.e. a database to A1. The new available IP(A1) address is sent to the legacy controller that includes the legacy subcontroller LC(X10) being implemented by e.g. an X10 Deamon. From now on the LC(X10) can reach the X10 devices in the Home Network HN1.

In a second example an X10 command is sent to turn off the light at A1. After adding a new legacy device to the X10 network and execution of the diffeent initialization steps, the legacy subcontroller LC(X10) sends a message "switch of the light" to the legacy device A1 with IP address "10.10.10.1. According to the explained system, the message will be received by the legacy proxy LP1 (X10) of A1. Upon reception, the legacy proxy LP1 (X10) translates the IP address "10.10.10.1" to A1. The legacy proxy LP1(X10) 'opens' the communication to the X10 device, A1, receives a checksums and sends a "send command off" message to the device A1. From that moment on it forwards the X10 messages from the legacy controller LC to the legacy device and vice versa.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method to control legacy devices (A1, A2, ..., D3, ..) in home networks (HN1, HN2, HN3, HN4), a plurality of said legacy devices (A1, A2, A3) communicating according to a predefined legacy protocol,
**characterised in that** said method comprises the steps of
- associating by a legacy proxy (LP1) in a home network (HN1) to a newly connected legacy device (A1) of said legacy devices an Internet Protocol address (IP(A1)) and storing a generated association in a memory (MEM); and
- forwarding by said legacy proxy (LP1) said associated Internet Protocol address (IP(A1)) to a legacy controller (LC) in an Internet Protocol network (IPN); and
in order to support communication between said legacy controller (LC) and said legacy device (A1) :
- upon reception by said legacy proxy (LP1) of a legacy protocol packet according to said legacy protocol, first transforming by first transforming means (TRANS1), said legacy protocol packet into an Internet Protocol packet being destined for said legacy controller (LC), and that comprises said associated Internet Protocol address (IP(A1)) being determined according to said association; and
- upon reception by said legacy proxy (LP1) of an Internet protocol packet, second transforming by second transforming means (TRANS2), said Internet Protocol packet into a legacy protocol packet being destined for said legacy device (A1) and therefore comprising a legacy address (X10(A1)) of said legacy device (A1).

2. The method to control legacy devices according to claim 1, **characterized in that**
- said step of first transforming comprises replacing a legacy protocol header of said legacy protocol packet with an Internet Protocol header that comprises, respectively, an Internet Protocol address (IP(LC)) of said legacy controller at a destination location and said associated Internet Protocol address (IP(A1) at a source location of said Internet Protocol header; and
- said step of second transforming comprises replacing an Internet Protocol header of said Internet Protocol packet with a legacy protocol header that comprises a legacy protocol address (X10(A1)) of said legacy device at a destination location of said legacy protocol of said legacy protocol header.

3. The method to control legacy devices according to claim 1, **characterized in that**
- said step of first transforming comprises keeping a payload of said legacy protocol packet as a payload of said Internet Protocol packet; and
- said step of second transforming comprises keeping a payload of said Internet Protocol packet as a payload of said legacy protocol packet.

4. The method to control legacy devices according to claim 1, **characterized in that** said method comprises also forwarding by said legacy controller (LC) to said legacy proxy (LP1) its Internet Protocol address.

5. The method to control legacy devices according to claim 1, **characterized in that** said step of associating comprises requesting by said legacy proxy (LP1) to a Dynamic Host Configuration Protocol server a new Internet Protocol address for said newly connected legacy device (A1).

6. The method to control legacy devices according to claim 1, **characterized in that** said step of forwarding comprises forwarding said associated Internet Protocol address (IP(A1)) via a Home Device Manager in the Internet Protocol network and by means of a customer premises equipment configuration protocol such as a TR69 protocol.

7. A legacy proxy (LP1) device in a home network (HN1) to communicate with legacy devices (A1, A2, A3, ...) in said home network (HN1) according to a predefined legacy protocol,
**characterised in that** said legacy proxy device (LP1) comprises :
- a first processor (PROC1) to associate to a newly connected legacy device (A1) of said legacy devices an Internet Protocol address (IP(A1)) and to store a generated association in a memory (MEM); and
- a forwarding means (FORW) to forward said associated Internet Protocol address (IP(A1)) towards a legacy controller (LC) in an Internet Protocol network (IPN); and
in order to support communication between said legacy controller (LC) and said legacy device (A1) via said legacy proxy (LP1):
- upon reception by said legacy proxy (LP1) of a legacy protocol packet according to said legacy protocol, first transforming means (TRANS1) to transform said legacy protocol packet into an Internet Protocol packet being destined for said legacy controller (LC), and that comprises said associated Internet Protocol address (IP(A1)) being determined according to said association and;
- upon reception by said legacy proxy (LP1) of an Internet protocol packet, second transforming means (TRANS2) to transform said Internet Protocol packet into a legacy protocol packet being destined for said legacy device (A1) and therefore comprising a legacy address (X10(A1)) of said legacy device (A1).

8. A legacy controller (LC) to control legacy devices (A1, A2, ..., D3, ...) in home networks (HN1, HN2, HN3, HN4), a plurality of said legacy devices (A1, A2, A3) communicating according to a predefined legacy protocol, said legacy controller (LC) comprises a legacy subcontroller (LC(X10)) to control said plurality of said legacy devices according to said predefined legacy protocol, **characterized in that** said legacy controller (LC) is located in an Internet Protocol Network (IPN) and that said legacy controller (LC) comprises an Internet Protocol processor (IP-PROC) to receive and to process Internet Protocol packets and to associate Internet Protocol addresses with respective legacy devices of said plurality of said legacy devices.
